# EUROPEAN PATENT SPECIFICATION

(11) **EP 2 116 993 B1**
(45) Date of publication and mention of the grant of the patent: **23.12.2015**
(21) Application number: 07707629.7
(22) Date of filing: 29.01.2007
(51) Int. Cl.: G09G 5/397, G09G 5/399, G09G 5/377, G09G 5/14

(54) **IMAGE DISPLAY DEVICE AND IMAGE DISPLAY METHOD**
BILDANZEIGEEINRICHTUNG UND BILDANZEIGEVERFAHREN
DISPOSITIF ET PROCÉDÉ D'AFFICHAGE D'IMAGE ET PROCÉDÉ D'AFFICHAGE D'IMAGE

(43) Date of publication of application: 11.11.2009
(73) Proprietor: Mitsubishi Electric Corporation, Chiyoda-ku Tokyo 100-8310 (JP)
(72) Inventor: NAITO, Manami, Chiyoda-ku Tokyo 100-8310 (JP); TSUBAKI, Yasunori, Chiyoda-ku Tokyo 100-8310 (JP); HAGIWARA, Toshiyuki, Chiyoda-ku Tokyo 100-8310 (JP); TOMARU, Yoshihiro, Chiyoda-ku Tokyo 100-8310 (JP)
(74) Representative: Pfenning, Meinig & Partner GbR
(86) International application number: PCT/JP2007/051398
(87) International publication number: WO 2008/093391

(56) References cited:
- EP-A1- 1 378 884
- EP-A1- 1 933 299
- JP-A- 2005 017 674
- JP-A- 2005 189 663
- JP-A- 2005 215 252
- JP-A- 2006 208 767
- US-A- 5 818 466

## Description

### Field of the Invention

The present invention relates to an image display device for and an image display method of displaying a plurality of moving images and still images.

### Background of the Invention

US 5,818,466 A discloses a so called multi-layer "sprite" graphic function in a video equipment apparatus. Therein, n sprite windows shall be displayed on a screen. In order to do so, besides a frame memory and a buffer for the general video data, a sprite memory together with a second buffer is provided. The data of the two buffers are then selectively multiplexed to be displayed on the display screen.

EP 1 933 299 A1 (relevant with respect to Art. 54(3) EPC) discloses: In displaying overlapped images on a monitor, a rendering display device is provided for the purpose of easily overlapping images without having complicated mask data or the like.

In the rendering display device, when at least one of image data stored in non-display memories is updated and if there exists an image whose layout information specifies that its image is displayed in the foreground of images corresponding to the updated image data, the updated image data and the image data specified to be displayed in the foreground are transferred to an entire-image non-display memory.

EP 1 378 884 A1 discloses: An image combining apparatus and an image combining method for minimizing the occupation of busses and for combining images at high performance and low power consumption. An image data memory generated update history information that indicates which image data is updated. A combiner reads only updated image data based on the update history information and generates combined image updating data. A display control information generator generates display control information containing transparent data and non-transparent data, respectively indicating the transparent portion and the non-transparent portion of the combined image updating data. A writer writes the combined image updating data into a combined image memory.

When displaying images in a plurality of layers, a conventional image display device sets up a different number of gradation levels for image information about each of the layers to generate a layer image in each of the layers and superimpose and combine these images into an image (for example, see patent reference 1). As a result, the conventional image display device can produce a composite image from the plurality of images in the layers and display the composite image effectively by, for example, easily determining which image layer is the highest layer. The conventional image display can also change the composite image by changing the order in which the layer images are displayed.

### [Patent reference 1] JP,10-164351,A

A problem with the conventional image display device is that the conventional image display device has an advantage of making it easy for users to understand the hierarchical structure of a composite image in which images in a plurality of layers are combined, while any image combined into the composite image cannot be replaced by another image nor be changed, and the number of gradation levels of each individual image cannot be changed.

The present invention is made in order to solve the above-mentioned problem, and it is therefore an object of the present invention to provide an image display device for and an image display method of being able to display a composite image in which images in a plurality of layers are superimposed on one another effectively with a replacement or a change of an image in the composite image.

### Disclosure of the Invention

The above mentioned problem is solved by the image display device according to claim 1 and the image display method according to claim 4. The dependent claims provide advantageous developments of the display device according to claim 1.

Therefore, the present invention provides an advantage of being able to produce an image screen display in which a plurality of images are superimposed on one another.

### Brief Description of the Figures

[Fig. 1] Fig. 1 is a block diagram schematically showing the structure of an image display device in accordance with Embodiment 1 of the present invention;
[Fig. 2] Fig. 2 is a view for explaining the concrete structure of the image display device in accordance with Embodiment 1, and an image displaying process performed by the image display device;
[Fig. 3] Fig. 3 is a view showing a flow of the image displaying operation performed by the image display device during Fig. 2;
[Fig. 4] Fig. 4 is a view showing an example of information held by a drawing order control means;
[Fig. 5] Fig. 5 is a view showing an example of contents which are displayed when a layer structure changing means changes the order of a layer structure and display positions in displayed contents shown in Fig. 2;
[Fig. 6] Fig. 6 is a view showing an example of contents which are displayed when a layer display status changing means changes operation statuses in the displayed contents shown in Fig. 5;
[Fig. 7] Fig. 7 is a block diagram schematically showing the structure of an image display device in accordance with Embodiment 2;
[Fig. 8] Fig. 8 is a view for explaining the concrete structure of the image display device in accordance with Embodiment 2, and an image display process performed by the image display device;
[Fig. 9] Fig. 9 is a view showing a flow of the image displaying operation performed by the image display device during Fig. 8;
[Fig. 10] Fig. 10 is a view showing an example in which displayed contents are changed with a wipe effect from right to left of screen;
[Fig. 11] Fig. 11 is a view showing an example of changing by replacement, and an example of changing by overwriting.

### Preferred Embodiments

Hereafter, in order to explain this invention in greater detail, the preferred embodiments of the present invention will be described with reference to the accompanying drawings.

### Embodiment 1.

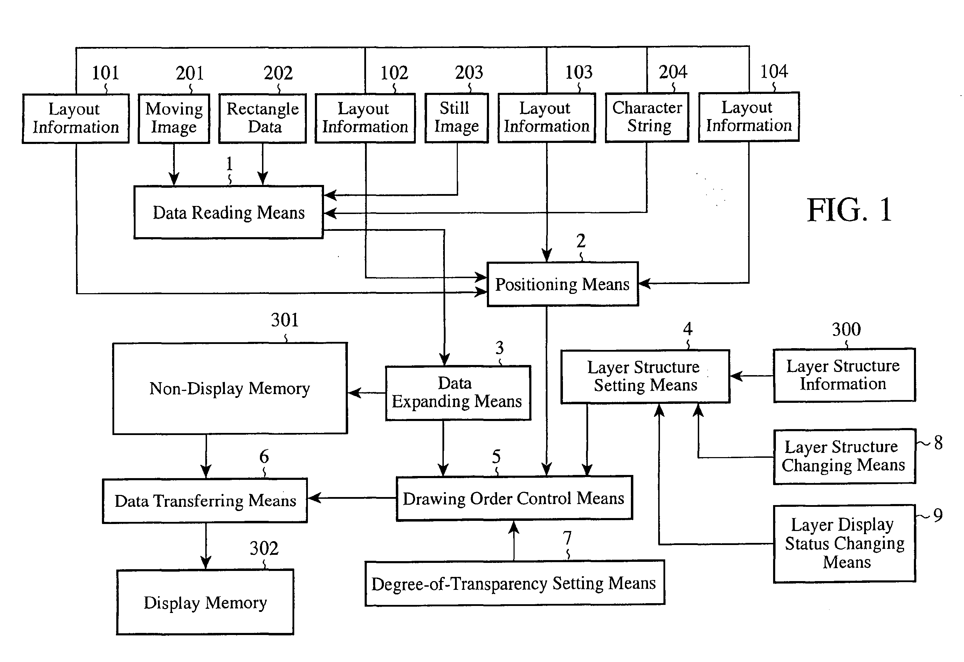

Fig. 1 is a block diagram schematically showing the structure of an image display device in accordance with Embodiment 1 of the present invention, and the image display device displays a plurality of graphics data on the screen of a display device (not shown in the figure) while superimposing them on one another. In accordance with the present invention, each graphics data are data about an image which is an object to be displayed on the screen. For example, the plurality of graphics data include moving image data 201 about a moving image which is an image to be displayed, rectangle data 202 about a rectangular frame for image display which is an image to be displayed, still image data 203 about a still image which is an image to be displayed, and character string data 204 about a character string which is an image to be displayed.

As shown in Fig. 1, the image display device in accordance with Embodiment 1 is provided with a data reading means 1, a positioning means 2, a data expanding means 3, a layer structure setting means 4, a drawing order control means 5, a data transferring means 6, a degree-of-transparency setting means 7, a layer structure changing means 8, and a layer display status changing means 9, in addition to a non-display memory 301 and a display memory 302.

The data reading means (an input means) 1 reads graphics data 201 to 204, and outputs them to the data expanding means 3. The positioning means (the input means) 2 reads pieces of layout information 101 to 104, and outputs them to the drawing order control means 5. Each of the pieces of layout information 101 to 104 specifies both the display position on the display screen of the corresponding graphics data, and the temporal sequence of the corresponding graphics data.

The data reading means 1 and the positioning means 2 acquire the graphics data 201 to 204 and the pieces of layout information 101 to 104 from the image display device, another computer via an electric communication line, a recording medium, or the like.

The data expanding means 3 expands the graphics data input thereto from the data reading means 1 to a memory area of the non-display memory 301, and outputs the expanded positions (the stored addresses) of the graphics data on this memory area to the drawing order control means 5. The non-display memory 301 is a memory area for temporarily storing data which does not relate to display of images on the display screen. The display memory 302 is a memory area for storing data to be displayed on the display screen, and display the contents to be displayed which are expanded to this memory area is displayed on the display screen.

The layer structure setting means (the input means) 4 reads layer structure information 300, and sets this layer structure information to the drawing order control means 5. The layer structure information 300 defines the layer structure of the layers. For example, the layer structure information includes information defining the range of the display area of each of the layers, information defining an upper limit relation among the display areas, and information defining operation statuses. The image display device also acquires the layer structure information 300 from the image display device, another computer via an electric communication line, a recording medium, or the like.

The drawing order control means (a control means) 5 sets up the drawing order and the final display position on the display screen of each of the graphics data, which are inputted from the data expanding means 3 and are stored at the expanded positions, on the basis of both the layout information set up by the positioning means 2 and the layer structure information set up by the layer structure setting means 4.

According to the drawing order on the display screen of each of the graphics data, which is set up by the drawing order control means 5, the data transferring means 6 reads the graphics data corresponding to this information from the non-display memory 301 and transfers the graphics data to the display memory 302.

The degree-of-transparency setting means 7 sets the degree of transparency of the image generated from the graphics data to the drawing order control means 5. The degree of transparency of the image generated from the graphics data shows the degree of transparency of the image at the time when displayed on the display screen, and the higher degree of transparency the image has, the more plainly another image in a lower layer can be seen when the image is superimposed on the other image.

The layer structure changing means 8 changes the information defining the range of the display area of each of the layers, the information defining the upper limit relation among the display areas, and so on among the pieces of information defined in the layer structure information 300 held by the layer structure setting means 4. The layer display status changing means (a status changing means) 9 changes the operation status on the display screen of the image in each of the layers among the pieces of information defined in the layer structure information 300 held by the layer structure setting means 4.

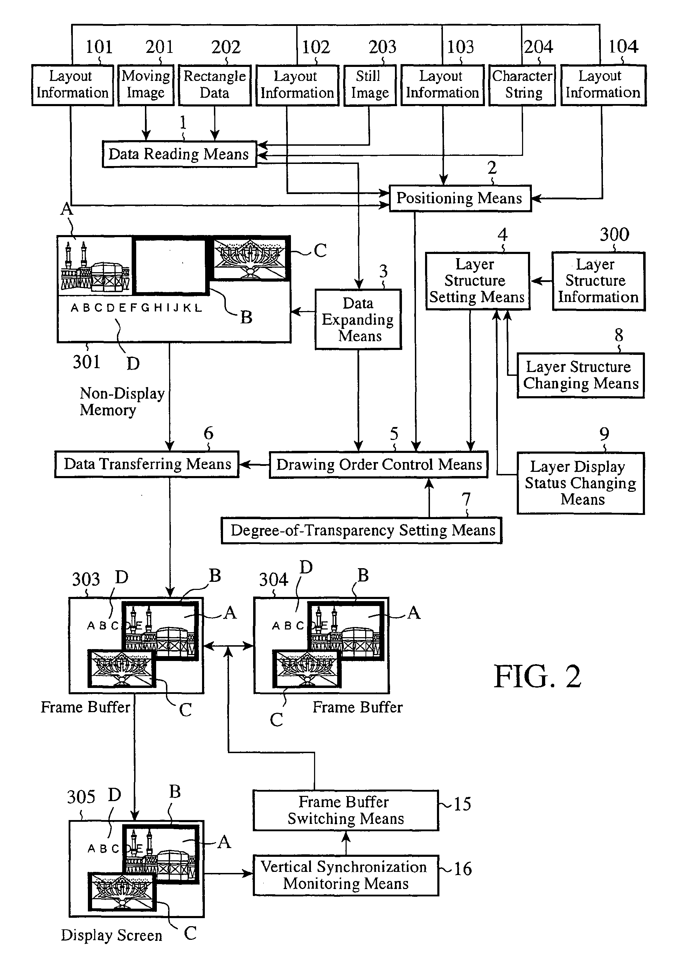

Fig. 2 is a view for explaining the concrete structure of the image display device in accordance with Embodiment 1, and the image displaying process performed by the image display device. In the figure, the same components as those shown in Fig. 1 are designated by the same reference numerals. The image display device shown in Fig. 2 is provided with frame buffers 303 and 304 as an example of the display memory 302 shown in Fig. 1. The image display device further has a frame buffer switching means 15 and a vertical synchronization monitoring means 16 for switching between these frame buffers 303 and 304.

Each of the frame buffers 303 and 304 displays graphics data written therein by the data transferring means 6 on the display screen 305. The frame buffer switching means 15 switches between the frame buffers 303 and 304 from which the image display device should read the graphics data to be displayed on the display screen 305 in synchronization with a vertical synchronizing signal from the vertical synchronization monitoring means 16. The vertical synchronization monitoring means 16 monitors the vertical synchronizing signal for the display screen 305, and transmits this vertical synchronizing signal to the frame buffer switching means 15.

The following explanation will be made by taking, as an example, a case in which moving image data A, rectangle data B, still image data C, and character string data D are displayed on the display screen 305.

In this case, the display screen 305 has a resolution of 1024x768 pixels, and the moving image data A are data about a moving image which is displayed with its pixel number 640x480 counted from its start point (400, 20) on the display screen 305. The rectangle data B are data about only a rectangular frame extending from its upper left corner (400, 20) to its lower right corner (1020, 500) on the display screen 305.

The still image data C are data about a still image which is displayed with its pixel number of 500x300 counted from its start point (100, 150) on the display screen 305. The character string data D are 500×100-pixel data about a character image which is displayed with its pixel number of 1024x100 counted from its start point (100, 200) on the display screen 305.

Furthermore, it is assumed that the moving image data A and the rectangle data B belong to a No. 1 layer (first layer), and information defining, as a relation between them, that the rectangle data B are to be displayed above the moving image data A is set up. It is further assumed that the still image data C belongs to a No. 2 layer (a second layer) and the character string data D belongs to a No. 3 layer (a third layer).

According to the relation between the above-mentioned graphics data and the layers, information showing that the graphics data have three layers as the number of the layers is defined in the layer structure information 300. In this case, it is assumed that the No. 1 layer has a 1024x520-pixel area counted from its start point (0, 0), the No. 2 layer has a 1024×384-pixel area counted from its start point (0, 384), and the No. 3 layer has a 1024×384-pixel area counted from its start point (0, 0) . It is further assumed that the No. 1 layer, the No. 2 layer, and the No. 3 layer are laminated in the order of No. 1, No. 2, and No. 3 from the bottom.

The data reading means 1, the positioning means 2, the data expanding means 3, the layer structure setting means 4, the drawing order control means 5, the data transferring means 6, the degree-of-transparency setting means 7, the layer structure changing means 8, the layer display status changing means 9, the frame buffer switching means 15, and the vertical synchronization monitoring means 16, which are the components of the image display device in accordance with Embodiment 1, can be implemented as concrete means in which software and hardware work in cooperation with each other on a computer by loading an image displaying processing program according to the scope of the present invention into the computer and then controlling the operation of the image displaying processing program. Furthermore, the non-display memory 301 and the display memory 302 are constructed in, for example, an internal memory of the above-mentioned computer, or an external storage unit connected to the computer.

Next, the operation of the image display device will be explained.

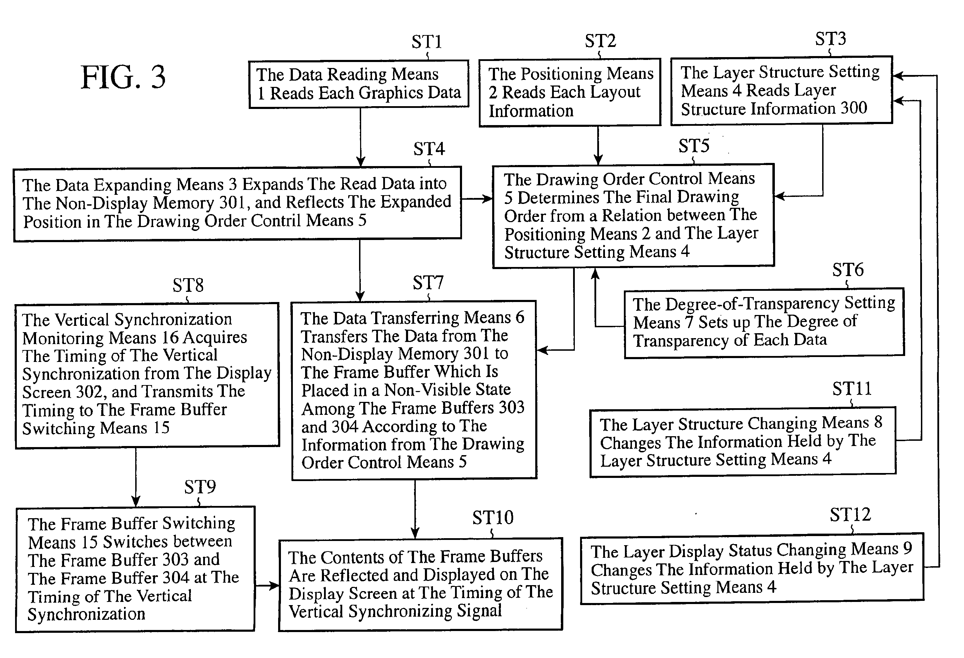

Fig. 3 is a view showing a flow of the image displaying operation performed by the image display device shown in Fig. 2, and the image displaying operation will be explained with reference to this view.

The data reading means 1 reads each of the graphics data (the moving image data A, the rectangle data B, the still image data C, and the character string data D) from the external device or the like, and outputs each of the graphics data to the data expanding means 3 (step ST1).

The positioning means 2 reads the layout information corresponding to each of the graphics data which the data reading means 1 has read, and sets the layout information to the drawing order control means 5 (step ST2). In this case, the layout information corresponding to each of the moving image data A, the rectangle data B, the still image data C, and the character string data D has been set up.

Next, the layer structure setting means 4 reads the layer structure information 300 corresponding to the layer to which each of the above-mentioned graphics data belong, and sets the layer structure information to the drawing order control means 5 (step ST3).

The data expanding means 3 expands each of the graphics data inputted thereto from the data reading means 1 into the non-display memory 301. Fig. 2 schematically shows that each of the moving image data A, the rectangle data B, the still image data C, and the character string data D are stored in the memory area of the non-display memory 301.

Thus, information showing the storage location (the expanded position) of each of the graphics data expanded into the memory area of the non-display memory 301 is outputted from the data expanding means 3 to the drawing control setting means 5 (step ST4). The non-display memory 301 can be the same memory area as a part of the frame buffers 303 and 304, or can extend over a plurality of memory areas of the frame buffers.

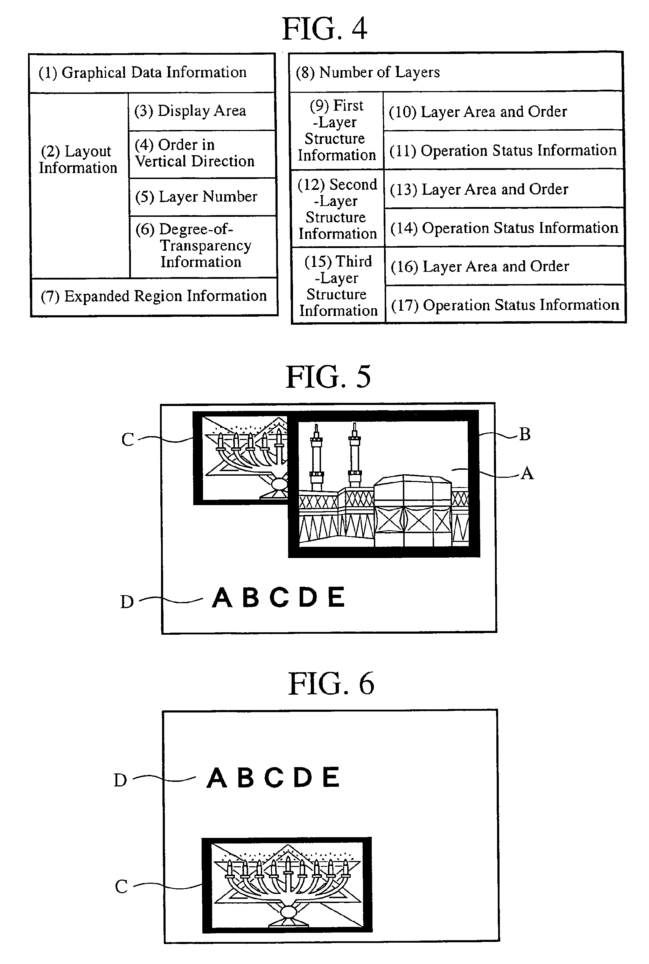

The drawing order control means 5 sets up the final display position on the display screen 305 and the final drawing order of each of the graphics data expanded into the non-display memory 301 by using the information about the expanded positions from the data expanding means 3, the layout information from the positioning means 2, and the layer structure information 300 from the layer structure setting means 4, and holds the final display position and the drawing order as information having a format as shown in Fig. 4 (step ST5).

In Fig. 4, as information ((1) graphics data information) about each of the graphics data (the moving image data A, the rectangle data B, the still image data C, and the character string data D), layout information ((2) layout information) and information ((7) expanded region information) showing the expanded position on the non-display memory 301 are set up.

There is information about a display area ((3) display area) as the layout information shown in Fig. 4, and the display position on the display screen 305 of the image generated from the corresponding graphics data, and so on are defined in the display area information. Furthermore, as the above-mentioned layout information, information about the order in which the image generated from the corresponding graphics data is superimposed in a vertical direction ((4) order in vertical direction), information showing that the image generated from the corresponding graphics data belongs to the how-manieth layer ((5) layer number), and information showing the degree of transparency of the image generated from the corresponding graphics data at the time when the image is displayed on the display screen ((6) degree-of-transparency information) are set up.

In addition, in the example of Fig. 4, as the layer structure information, the total number of the layers to which the graphics data belong ((8) number of layers) is set up, and, as information about each layer, there are provided layer structure information about the No. 1 layer ((9) first-layer structure information), layer structure information about the No. 2 layer ((12) second-layer structure information), and layer structure information about the No. 3 layer ((15) third-layer structure information).

In each above-mentioned layer structure information, information defining a range on the display screen 305 of the layer area and information defining the display order in which the images are displayed in the layer ((10), (13), or (16) layer area and order), and information defining the operation statuses on the display screen 305 of the images in the layer ((11), (14), or (17) operation status information) is set up.
The information shown in Fig. 4 limitedly shows only the one used in this Embodiment 1. In other words, the present invention is not limited to only the information items shown in Fig. 4, and any other information item can also be used as long as it complies with the scope of the present invention and is associated the display process of displaying graphics data.

In step ST6, the degree-of-transparency setting means 7 determines the degree of transparency of each of the graphics data, and outputs the degree of transparency to the drawing order control means 5. As a result, the drawing order control means 5 reflects the degree of transparency inputted thereto from the degree-of-transparency setting means 7 in the degree of transparency of the corresponding image generated from the graphics data at the time of displaying the image (in Fig. 4, (6) degree of transparency information) among the pieces of information which are determined for the graphics data. For example, the drawing order control means sets the degree of transparency of the moving image data A to 0% to make the image completely untransparent (opaque), sets the degree of transparency of the rectangle data B to 50% to make the image semi-transparent, sets the degree of transparency of the still image data C to 0% to make the image completely untransparent, and sets the degree of transparency of the character string data D to 80% to make the image semi-transparent.

Next, the data transferring means 6 inputs the above-mentioned information held by the drawing order control means 5, reads the graphics data corresponding to this information from the non-display memory 301, and transfers the graphics data to the frame buffer which is currently placed in a non-display state among the frame buffers 303 and 304 (step ST7). As a result, according to the setting information, as shown in Fig. 4, provided by the drawing order control means 5, the contents to be displayed on the display screen 305 of the images generated from the plurality of graphics data are expanded into the frame buffer.

In the example of Fig. 2, the moving image data A which are to be displayed at the lowest level, among the graphics data belonging to the No. 1 layer, are offset according to the start point of the layer area of the No. 1 layer, and are then transferred. In this case, because the layer area of the No. 1 layer extends from its start point (0, 0), as mentioned above, the display position is not offset, and therefore the moving image data A are transferred as data having no change in the degree of transparency of the image and displayed with a pixel numbers of 640x480 counted from the start point (400, 20) of the display screen 305.

Furthermore, the rectangle data B which similarly belong to the No. 1 layer are not offset, and the rectangle data B are transferred as data in which the degree of transparency of the image has been changed to 50% and which are displayed as a rectangular frame extending from its upper left corner (400, 20) to its lower right corner (1020, 500) on the display screen 305.

Next, the still image data C which are graphics data belonging to the No. 2 layer are offset according to the start point shown by the layer area information about the No. 2 layer, and are transferred. In this case, because the No. 2 layer extends from its start point (0, 384), the start point of the still image data C is changed to (100, 534) by adding (0, 384) to the start point (100, 150) which is the display position of the still image data on the display screen 305, which is defined in the layout information, and the still image data C are then transferred as data having no change in the degree of transparency of the image and displayed at this display position.

The character string data D which are graphics data belonging to the No. 3 layer are offset according to the start point shown by the layer area information about the No. 3 layer, and are transferred. In this case, because the No. 3 layer extends from its start point (0, 0), the position of the image of the character string data is not offset and the character string data are transferred as data about the image having a degree of transparency of 80% and displayed in a range of 500x100 pixels counted from the start point (100, 200) on the display screen 305.

The data transferring means 6 transfers only data about an area smaller than the display area in which each graphics data expanded into the non-display memory 301 are displayed to the frame buffers. As a result, as described in the frame buffers 303 and 304 shown in Fig. 2, data showing that the character string data D are displayed at the highest level on the display screen 305, and the moving image data A displayed within the rectangular frame generated from the rectangle data B are displayed below the still image data C and the character string data D are stored in the frame buffers.

In the example shown in Fig. 2, although the image generated from any graphics data falls within the range of the corresponding layer area, in a case in which graphics data about a larger image than the layer area are inputted, data about only a range which overlaps the layer area are transferred to the frame buffers.

Next, the vertical synchronization monitoring means 16 monitors the vertical synchronizing signal of the display screen 305, and transmits information to the frame buffer switching means 15 according to the vertical synchronizing signal (step ST8). For example, the vertical synchronization monitoring means 16 monitors the vertical synchronization of the display screen 305, and outputs the vertical synchronizing signal to the frame buffer switching means 15 at the timing at which the vertical synchronization occurs.

The frame buffer switching means 15, in step ST9, switches between one in a display state of the frame buffers 303 and 304 and the other one in a non-display state (i.e., switches between a frame buffer for display screen and a frame buffer for background) in synchronization with the information (the vertical synchronizing signal) from the vertical synchronization monitoring means 16. As a result, the contents of the frame buffers are reflected on the display screen 305 at the timing of the vertical synchronizing signal of the display screen 305, so that the images can be displayed without causing any flicker (step ST10).

The layer structure changing means 8 changes the order and the display areas of the layer structure in the layer structure information 300. As a result, the layer structure setting means 4 returns to step ST3 in which it performs a resetting process of resetting up the layer structure information 300 (step ST11) to change the contents to be displayed on the display screen 305.

For example, the layer structure setting means changes the layer structure information 300 to set up this layer structure information in such a way that the No. 3 layer, the No. 2 layer, and the No. 1 layer are displayed in the order of the No. 3 layer, the No. 2 layer, and the No. 1 layer from the bottom, and the layer area information about the No. 3 layer indicates that its start point is (0, 384) and the layer area information about the No. 2 layer indicates that its start point is start point (0, 0). As a result, as shown in Fig. 5, the character string data D are displayed at the lowest level on the display screen 305, and the moving image data A displayed within the rectangular frame generated from the rectangle data B are displayed above the still image data C and the character string data D. Furthermore, the still image generated from the still image data C is displayed at a side-by-side position with respect to the moving image generated from the moving image data A, and the character image "ABCDE" generated from the character string data D is placed in a lower portion of the screen.

The layer display status change means 9 changes the operation status of each of the layers in the layer structure information 300. As a result, the layer structure setting means 4 returns to step ST3 in which it performs the resetting process of resetting up the layer structure information 300 (step ST12). The layer structure setting means can thus stop the motion of the moving image displayed on the display screen 305, and can also make the moving image skip to the final frame or to make the display of the moving image not visible.

For example, by changing the operation status information about the No. 1 layer in the layer structure information 300 to make the images in the first layer not visible, the layer structure setting means can make the images generated from the moving image data A and the rectangle data B not visible from the contents displayed in Fig. 5, as shown in Fig. 6.

As mentioned above, in accordance with this Embodiment 1, the drawing order control means 5 determines the contents to be displayed of images generated from graphics data 201 to 204 (the display positions and the drawing order of the images) on the basis of a combination of layer structure information 300 and pieces of layout information 101 to 104 which correspond to the graphics data 201 to 204, respectively. Therefore, by appropriately setting up the description of the layer structure information 300 and the descriptions of the pieces of layout information 101 to 104, the image display device can produce a display of the images which matches the user's taste effectively.

Furthermore, the layer structure changing means 8 and the layer display status changing means 9 can make the plurality of graphics data visible or not visible simultaneously or can change the display positions of the plurality of graphics data by changing the description of the layer structure information 300 and the descriptions of the pieces of layout information 101 to 104.

For example, the image display device can implement enlargement or reduction of the image generated from each graphics data by performing a changing process of enlarging or reducing the size of the corresponding layer area by using the layer structure changing means 8. The image display device can also change the degree of transparency of the image generated from each graphics data while displaying the image by setting a desired degree of transparency for the graphics data by using the degree-of-transparency setting means 7.

### Embodiment 2.

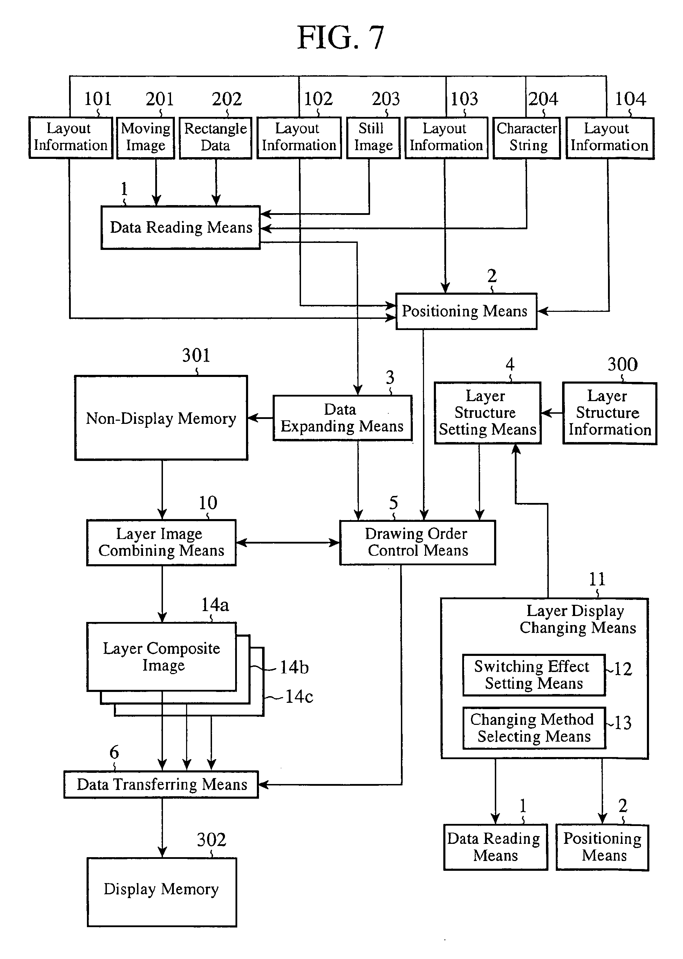

Fig. 7 is a block diagram schematically showing the structure of a image display device in accordance with Embodiment 2, which is not an embodiment of the present invention but helpful for understanding the present invention , and the image display device displays a plurality of graphics data on the screen of a display unit (not shown in the figure) while superimposing them on one another. The image display device in accordance with Embodiment 2 is provided with a layer image combining means 10, as shown in Fig. 7, in addition to the structure shown in above-mentioned Embodiment 1, and includes a layer display changing means 11 instead of the layer structure changing means 8 and the layer display status changing means 9. In Fig. 7, the same components as those shown in Fig. 1 are designated by the same reference numerals. Hereafter, the duplicated explanation of the components will be omitted.

On the basis of information defining the drawing order on the display screen of the images generated from the graphics data which is determined by a drawing order control means 5, the layer image combining means 10 reads the graphics data corresponding to the information from a non-display memory 301, and generates layer composite images 14a, 14b, and 14c generated from the plurality of graphics data according to the description of the information.

The layer display changing means 11 transmits a change instruction to a data reading means 1, a positioning means 2, and a layer structure setting means 4 so as to make them to read data again, and is provided with a switching effect setting means 12 and a changing method selecting means 13.

The switching effect setting means 12 receives a setup of a switching effect, and, when performing a changing process, the image display device makes the layer display changing means perform the changing process on a display memory 302 (frame buffers 303 and 304) with the set-up switching effect. For example, the layer display changing means changes the previous image to the next image with the switching effect such as dissolve or wipe.

The changing method selecting means 13 receives a setup of a changing method, and, when performing the changing process, the image display device makes the layer display changing means 11 perform the changing process on the display memory 302 (the frame buffers 303 and 304) by using the set-up changing method. For example, the changing method selecting means can switch among changing of the whole of each layer area, changing of only part of each layer area, changing by overwriting, changing by switching, and so on.

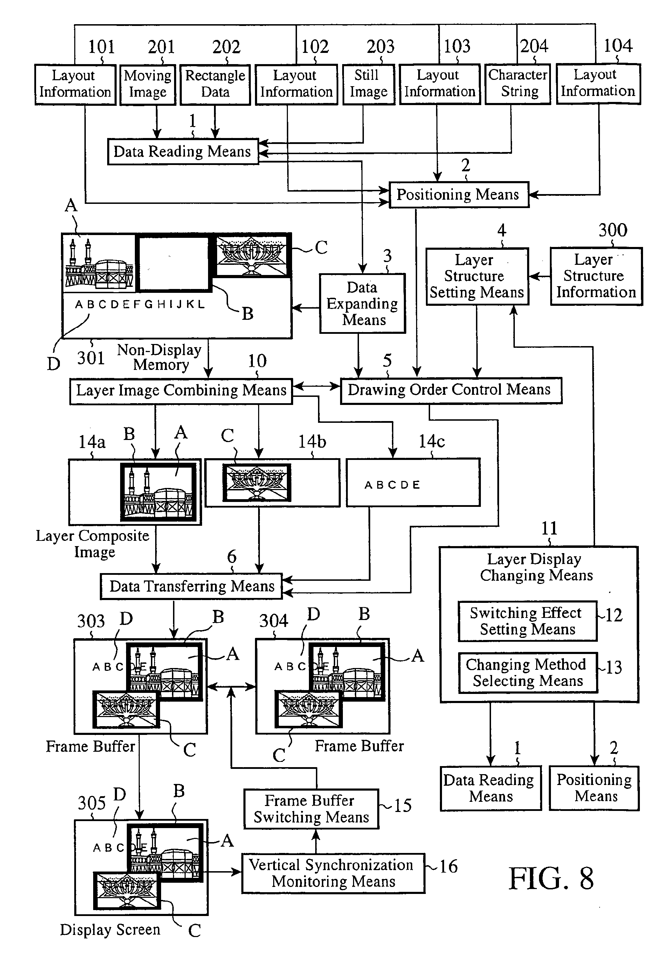

Fig. 8 is a view for explaining the concrete structure of the image display device in accordance with Embodiment 2, and an image display process performed by the image display device. In the figure, the same components as those shown in Fig. 7 are designated by the same reference numerals. The image display device shown in Fig. 8 is provided with the frame buffers 303 and 304 as an example of the display memory 302 shown in Fig. 7. The image display device also has a frame buffer switching means 15 and a vertical synchronization monitoring means 16 which switch between these frame buffers. The fundamental operations of the frame buffers 303 and 304, the frame buffer switching means 15, and the vertical synchronization monitoring means 16 are the same as those of above-mentioned Embodiment 1.

The following explanation will be made by taking, as an example, a case in which moving image data A, rectangle data B, still image data C, and character string data D are displayed on the display screen 305.

In this case, the display screen 305 has a resolution of 1024x768 pixels, and the moving image data A are data about a moving image which is displayed with its pixel number 640x480 counted from its start point (400, 20) on the display screen 305. The rectangle data B are data about only a rectangular frame extending from its upper left corner (400, 20) to its lower right corner (1020, 500) on the display screen 305.

The still image data C are data about a still image which is displayed with its pixel number of 500x300 counted from its start point (100, 150) on the display screen 305. The character string data D are 500×100-pixel data about a character image which is displayed with its pixel number of 1024×100 counted from its start point (100, 200) on the display screen 305.

Furthermore, it is assumed that the moving image data A and the rectangle data B belong to a No. 1 layer, and information defining, as a relation between them, that the rectangle data B are to be displayed above the moving image data A is set up. It is further assumed that the still image data C belongs to a No. 2 layer and the character string data D belongs to a No. 3 layer.

According to the relation between the above-mentioned graphics data and the layers, information showing that the graphics data have three layers as the number of the layers is defined in layer structure information 300. In this case, it is assumed that the No. 1 layer has a 1024x520-pixel area counted from its start point (0, 0), the No. 2 layer has a 1024x384-pixel area counted from its start point (0, 384), and the No. 3 layer has a 1024x384-pixel area counted from its start point (0, 0). It is further assumed that the No. 1 layer, the No. 2 layer, and the No. 3 layer are laminated in the order of No. 1, No. 2, and No. 3 from the bottom.

The data reading means 1, the positioning means 2, a data expanding means 3, the layer structure setting means 4, the drawing order control means 5, a data transferring means 6, a degree-of-transparency setting means 7, the layer combining means 10, the layer display changing means 11, the frame buffer switching means 15, and the vertical synchronization monitoring means 16, which are the components of the image display device in accordance with Embodiment 2, can be implemented as concrete means in which software and hardware work in cooperation with each other on a computer by loading an image displaying processing program according to the scope of the present invention into the computer and then controlling the operation of the image displaying processing program. Furthermore, the non-display memory 301 and the display memory 302 are constructed in, for example, an internal memory of the above-mentioned computer, or an external storage unit.

Next, the operation of the image display device will be explained.

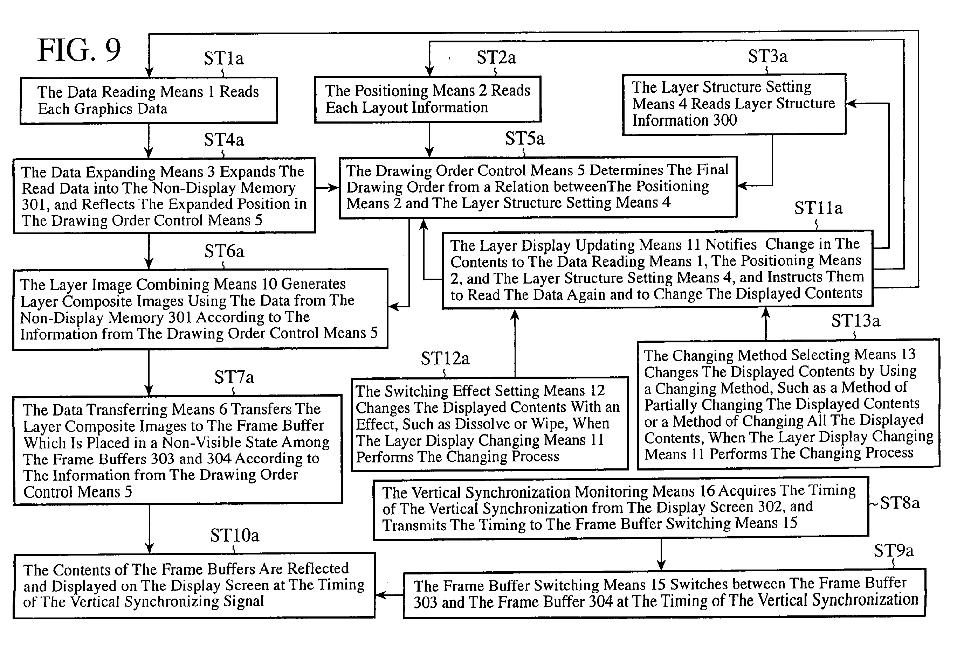

Fig. 9 is a view showing a flow of the image displaying operation performed by the image display device shown in Fig. 8, and the image displaying operation will be explained with reference to this view.

The data reading means 1 reads each of the graphics data (the moving image data A, the rectangle data B, the still image data C, and the character string data D) from the external device or the like, and outputs each of the graphics data to the data expanding means 3 (step ST1a).

The positioning means 2 reads the layout information corresponding to each of the graphics data which the data reading means 1 has read, and sets the layout information to the drawing order control means 5 (step ST2a). In this case, the layout information corresponding to each of the moving image data A, the rectangle data B, the still image data C, and the character string data D has been set up.

Next, the layer structure setting means 4 reads the layer structure information 300 corresponding to the layer to which each of the above-mentioned graphics data belong, and sets the layer structure information to the drawing order control means 5 (step ST3a).

The data expanding means 3 expands each of the graphics data inputted thereto from the data reading means 1 into the non-display memory 301. Fig. 8 schematically shows that each of the moving image data A, the rectangle data B, the still image data C, and the character string data D are stored in the memory area of the non-display memory 301.

Thus, information showing the storage location (the expanded position) of each of the graphics data expanded into the memory area of the non-display memory 301 is outputted from the data expanding means 3 to the drawing control setting means 5 (step ST4a). The non-display memory 301 can be the same memory area as a part of the frame buffers 303 and 304, or can extend over a plurality of memory areas of the frame buffers.

The drawing order control means 5 sets up the final display position on the display screen 305 and the final drawing order of each of the graphics data expanded into the non-display memory 301 by using the information about the expanded positions from the data expanding means 3, the layout information from the positioning means 2, and the layer structure information 300 from the layer structure setting means 4, and holds the final display position and the drawing order as information having a format as shown in Fig. 4 (step ST5a).

Next, the layer image combining means 10 accepts the above-mentioned setting information held by the drawing order control means 5, reads the graphics data corresponding to this information from the non-display memory 301, generates layer composite images 14a, 14b, and 14c generated from the plurality of graphics data on the basis of the information, holds the layer composite images, and transmits information (a pointer) specifying each layer composite image to the drawing order control means 5 (step ST6a).

For example, the layer image combining means places the images generated from the moving image data A and the rectangle data B which are to be displayed at the lowest level among the graphics data belonging to the No. 1 layer according to their display positions to generate the layer composite image 14a as shown in Fig. 8. After generating the layer composite image 14a, the layer image combining means 10 stores the layer composite image in a predetermined memory area.

The layer image combining means transmits an address or the like showing this storage location to the drawing order control means 5 as a pointer of the data about the layer composite image 14a. Similarly, the layer image combining means places the image generated from the still image data C according to its display position to generate the layer composite image 14b as shown in Fig. 8, and then transmits a pointer to the drawing order control means 5. The layer image combining means also places the image generated from the character string data D according to its display position to generate the layer composite image 14c as shown in Fig. 8, and then transmits its pointer to the drawing order control means 5.

Next, the data transferring means 6 accepts the pointer information of each layer composite image from the drawing order control means 5, reads the layer composite images 14a, 14b, and 14c from the layer image combining means 10 according to these pointers, and transfers the layer composite images to the frame buffer which is currently being placed in a non-display among the frame buffers 303 and 304 (step ST7a). As a result, according to the setting information set up by the drawing order control means 5, the contents to be displayed on the display screen 305 of the plurality of layer composite images 14a, 14b, and 14c are expanded into the frame buffer.

In the example of Fig. 8, the data transferring means offsets the layer composite image 14a in the No. 1 layer according to the start point of the layer area of the No. 1 layer and transfers the layer composite image 14a. In this case, because the layer area of the No. 1 layer extends from its start point (0, 0), as mentioned above, the display position is not offset, and therefore the layer composite image 14a is transferred as data having no change in the degree of transparency of the image and displayed with a pixel numbers of 640x480 counted from the start point (400, 20) on the display screen 305.

Next, the data transferring means offsets the layer composite image 14b in the No. 2 layer according to the start point of the layer area information about the No. 2 layer and transfers the layer composite image 14b. In this case, because the No. 2 layer extends from its start point (0, 384), the start point of the still image data C is changed to (100, 534) by adding (0, 384) to the start point (100, 150) which is the display position of the still image data on the display screen 305, which is defined in the layout information, and the still image data C are then transferred as data displayed at this display position.

The data transferring means offsets the layer composite image 14c in the No. 3 layer according to the start point of the layer area information about the No. 3 layer and transfers the layer composite image 14c. In this case, because the No. 3 layer extends from its start point (0, 0), the position of the layer composite image is not offset and the layer composite image is transferred as data displayed in a range of 500x100 pixels from the start point (100, 200) on the display screen 305.

The data transferring means 6 transfers only data about an area smaller than the display area in which each graphics data expanded into the non-display memory 301 are displayed to the frame buffers. As a result, as described in the frame buffers 303 and 304 shown in Fig. 8, data showing that the character string data D are displayed at the highest level on the display screen 305, and the moving image data A displayed within the rectangular frame generated from the rectangle data B are displayed below the still image data C and the character string data D are stored in the frame buffers.

In the example shown in Fig. 8, although the image generated from any graphics data falls within the range of the corresponding layer area, in a case in which graphics data about a larger image than the layer area are inputted, data about only a range which overlaps the layer area are transferred to the frame buffers.

Next, the vertical synchronization monitoring means 16 monitors the vertical synchronizing signal of the display screen 305, and transmits information to the frame buffer switching means 15 according to the vertical synchronizing signal (step ST8a). For example, the vertical synchronization monitoring means 16 monitors the vertical synchronization of the display screen 305, and outputs the vertical synchronizing signal to the frame buffer switching means 15 at the timing at which the vertical synchronization occurs.

The frame buffer switching means 15, in step ST9a, switches between one in a display state of the frame buffers 303 and 304 and the other one in a non-display state (i.e., switches between a frame buffer for display screen and a frame buffer for background) in synchronization with the information (the vertical synchronizing signal) from the vertical synchronization monitoring means 16. As a result, the contents of the frame buffers are reflected on the display screen 305 at the timing of the vertical synchronizing signal of the display screen 305, so that the images can be displayed without causing any flicker (step ST10a).

When changing the images displayed on the display screen 305 in the above-mentioned way, the layer display changing means 11 transmits a changing instruction for changing the layer composite images to the data reading means 1, the positioning means 2, and the layer structure setting means 4 so as to instruct each of the above-mentioned means to read the data again and to change the display of the images (step ST11a).

As a result, the data reading means 1, the positioning means 2, and the layer structure setting means 4 return to steps ST1a to ST3a, respectively, to perform reading of the data. By using the data which the data reading means, the positioning means, and the layer structure setting means have thus read, the drawing order control means 5 and the layer image combining means 10 can change the layer composite images 14a, 14b, and 14c to change the contents to be displayed on the display screen 305 by performing the processes in steps ST4a to ST6a. At that time, the drawing order control means and the layer image combining means can change all the layer composite images simultaneously, or change only a specified one of the layer composite images.

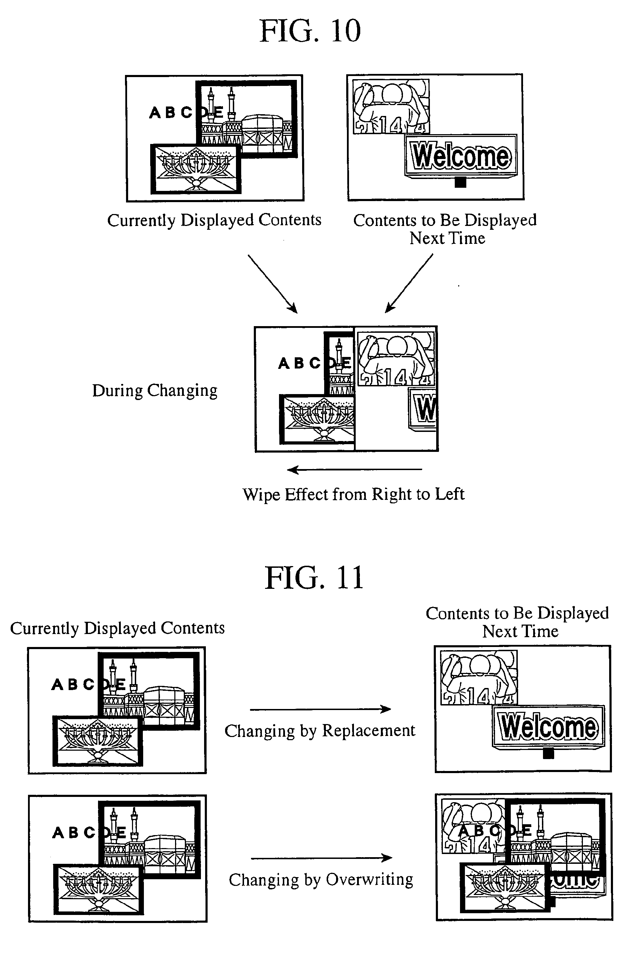

Furthermore, the switching effect setting means 12 receives a setup of a switching effect which a user desires by using a not-shown input unit, and, when performs the changing process, the image display device makes the layer display changing means 11 perform a switching process of switching between display images on the image data stored in the frame buffers with a predetermined switching effect which is set up by the user (step ST12a). For example, in a case in which a wipe effect of gradually replacing the images which have been displayed with to the next images as shown in Fig. 10 (in the example of Fig. 10, the changing of the displayed contents from the previous images to the next images is performed gradually along a direction from right to left on the display screen) is set up as the switching effect. As a result, effective changing which matches the user's taste can be provided.

The changing method selecting means 13 receives a setup of a changing method which the user desires by using a not-shown input unit, and, when performing the changing process, the image display device makes the layer display changing means 11 perform the changing process of changing the display images by using the predetermined changing method which is set up by the user (step ST13a). As a result, the changing method selecting means can switch between changing by replacement and changing by overwriting, as shown in Fig. 11, according to the use of the display images (contents).

As mentioned above, in accordance with this Embodiment 2, the drawing order control means 5 determines contents to be displayed based on graphics data 201 to 204 on the basis of a combination of layer structure information 300 and pieces of layout information 101 to 104 which correspond to the graphics data 201 to 204, respectively. Therefore, this Embodiment 2 can offer the same advantages as those provided by above-mentioned Embodiment 1.

Furthermore, because the image display device in accordance with this Embodiment 2 includes the layer display changing means 11 that issues a changing instruction for changing the display images to the next images to the data reading means 1, the positioning means 2, and the layer structure setting means 4 while displaying the previous images, the image display device can change the composite images efficiently through management of a plurality of layers.

In addition, because the image display device in accordance with this Embodiment 2 includes the switching effect setting means 12 that performs the switching process of switching between display images with a desired switching effect when the layer display changing means 11 performs the changing process, and the changing method selecting means 13 that performs changing of the display images with a desired changing method when the layer display changing means 11 performs the changing process, the image display device can produce an effective display of images which matches the user's taste.

### Industrial Applicability

As mentioned above, the image display device in accordance with the present invention can produce an effective display of images through replacement or change of an image in a composite image in which images in a plurality of layers are superimposed on one another. Therefore, the image display device in accordance with the present invention is suitable for, for example, a contents display device that displays contents, such as electronic advertisement.

## Claims

1. An image display device for superimposing a plurality of images generated from a plurality of graphics data and for displaying the superimposed images on a display screen (305), comprising:
an input means (1, 2, 4) for inputting said graphics data (201 - 204), layout information (101 - 104) that defines a display layout of the images generated from said graphics data (201 - 204) on the display screen (305) for each of layers to which said images belong, and layer structure information (300) that describes a layered structure (10, 13, 16) of the layers to which the images generated from said graphics data (201 - 204) belong and that includes operation status (11, 14, 17), wherein the operation status defines whether to make an image for each of the layers visible or non-visible, and defines whether to make a moving image for each of the layers reproduction or stop;
a control means (5) for setting up information on display positions, drawing order and the operation status on said display screen (305) of the images generated from said graphics data (201 - 204) input by the input means (1, 2, 4) for each of the layers on a basis of said layout information (101 - 104) and said layer structure information (300);
a data transferring means (6) for transferring the graphics data (201 - 204) input by the input means (1, 2, 4) to a display memory (302) on a basis of the information set up by the control means (5);
a layer structure changing means (8) for changing the layered structure of the layers of the layer structure information (300); and
a status changing means (9) for changing the operation status on the display screen (305) of an image generated from said graphics data on a layer-by-layer basis, wherein the image display device is configured such that, if the status changing means (9) changes such operation status of a layer from visible to non-visible and from reproduction to stop, an image in this layer can be made non-visible and stop,
wherein the layer structure changing means (8) and the status changing means (9) are adapted to change the display positions of the images generated from said graphics data (201 - 204) by changing the description of the layer structure information (300) and the description of said layout information (101 - 104).

2. The image display device according to claim 1, **characterized in that** the image display device includes a transparency setting means (7) for setting up a transparency of an image generated from graphics data.

3. The image display device according to claim 1, **characterized in that** the image display device includes a layer image combining means (10) for superimposing images generated from graphics data on one another on a layer-by-layer basis and on a basis of the layer structure information (300) so as to generate layer composite images (14a, 14b, 14c), and
the data transferring means (6) is configured to transfer the generated layer composite images by the layer image combining means to the display memory (302).

4. The image display device according to claim 1, **characterized in that** the status changing means (9) can stop motion of a moving image, and can also skip a frame to be displayed.

5. An image display method which an image display device that superimposes a plurality of images generated from a plurality of graphics data (201 - 204) and displays the superimposed images on a display screen (305) uses, comprising the steps of:
said image display device inputting said graphics data (201 - 204), layout information (101 - 104) that defines a display layout of the images generated from said graphics data on said display screen for each of layers to which said images belong, and layer structure information (300) that describes a layered structure (10, 13, 16) of the layers to which the images generated from said graphics data (201 - 204) belong and that includes operation status (11, 14, 17), wherein the operation status defines whether to make an image for each of the layers visible or not visible, and defines whether to make a moving image for each of the layers reproduction or stop;
said image display device setting up information on display positions, drawing order and the operation status on said display screen (305) of the images generated from said input graphics data (201 - 204) for each of the layers on a basis of said layout information (101 - 104) and said layer structure information (300);
said image display device transferring the input graphics data (201 - 204) to a display memory (302) on a basis of the information set up in the setting up step;
said image display device changing the layered structure of the layers of the layer structure information (300); and
said image display device changing the operation status on the display screen (305) of an image generated from said graphics data on a layer-by-layer basis, wherein if such operation status of a layer is changed from visible to non-visible and from reproduction to stop, an image in this layer can be made non-visible and stop,
wherein the display positions of the images generated from said graphics data (201 - 204) are changed by changing the description of the layer structure information (300) and the description of said layout information (101 - 104).

## Patentansprüche

1. Eine Bildanzeigevorrichtung zum Überlagern einer Mehrzahl von Bildern, die aus einer Mehrzahl von Grafikdaten erzeugt werden, und zum Anzeigen der überlagerten Bilder auf einer Bildanzeige (305), die umfasst:
Ein Eingabemittel (1, 2, 4) zum Eingeben von besagten Grafikdaten (201-204), von einer Layout-Information (101-104), die ein Anzeigenlayout von den Bildern, die von besagten Grafikdaten (201-204) erzeugt werden, auf der Bildanzeige (305) für jede der Schichten, zu denen besagte Bilder gehören, definiert, und von einer Schichtstrukturinformation (300), die eine geschichtete Struktur (10, 13, 16) von den Schichten, zu denen die aus besagten Grafikdaten (201-204) erzeugten Bilder gehören, beschreibt und die einen Betriebsstatus (11, 14, 17) beinhaltet, wobei der Betriebsstatus definiert, ob ein Bild für jede der Schichten sichtbar oder unsichtbar zu machen ist, und definiert, ob ein Bewegtbild für jede der Schichten auf Wiedergabe oder Stopp darzustellen ist;
ein Steuermittel (5) zum Einrichten von Informationen über Anzeigepositionen, eine Zeichnungsfolge und den Betriebsstatus auf besagter Bildanzeige (305) von den Bildern, die von besagten Grafikdaten (201-204) erzeugt werden, die durch das Eingabemittel (1, 2, 4) eingegeben werden, für jede der Schichten basierend auf besagter Layout-Information (101-104) und auf besagter Schichtstrukturinformation (300);
ein Datenübergabemittel (6) zum Übergeben der Grafikdaten (201-204), die durch das Eingabemittel (1, 2, 4) eingegeben werden, an einen Anzeigespeicher (302) basierend auf den Informationen, die von dem Steuermittel (5) eingerichtet werden;
ein Schichtstrukturänderungsmittel (8) zum Ändern der geschichteten Struktur der Schichten der Schichtstrukturinformation (300); und
ein Statusänderungsmittel (9) zum Ändern des Betriebsstatus auf der Bildanzeige (305) von einem Bild, das von besagten Grafikdaten auf einer Schicht-um-Schicht-Basis erzeugt wird,
wobei die Bildanzeigevorrichtung so ausgebildet ist, dass, wenn das Statusänderungsmittel (9) solch einen Betriebsstatus von einer Schicht von sichtbar auf unsichtbar und von Wiedergabe auf Stopp ändert, ein Bild in dieser Schicht unsichtbar gemacht und auf Stopp dargestellt werden kann,
wobei das Schichtstrukturänderungsmittel (8) und das Statusänderungsmittel (9) ausgebildet sind zum Ändern der Anzeigepositionen der Bilder, die aus besagten Grafikdaten (201-204) erzeugt werden, durch Ändern der Beschreibung der Schichtstrukturinformation (300) und der Beschreibung von besagter Layout-Information (101-104).

2. Die Bildanzeigevorrichtung gemäß Anspruch 1, **dadurch gekennzeichnet, dass** die Bildanzeigevorrichtung ein Transparenzsetzmittel (7) zum Einrichten einer Transparenz eines Bildes, das aus Grafikdaten erzeugt wird, umfasst.

3. Die Bildanzeigevorrichtung gemäß Anspruch 1, **dadurch gekennzeichnet, dass** die Bildanzeigevorrichtung ein Schichtbildkombiniermittel (10) zum Überlagern von Bildern, die aus Grafikdaten eins über dem anderen auf einer Schicht-um-Schicht-Basis und basierend auf der Schichtstrukturinformation (300) erzeugt werden, umfasst, um Schichtzusammensetzbilder (14a, 14b, 14c) zu erzeugen, und
dass das Datenübergabemittel (6) ausgebildet ist zum Übergeben der Schichtzusammensetzbilder, die durch das Schichtbildkombiniermittel erzeugt werden, an den Anzeigespeicher (302).

4. Die Bildanzeigevorrichtung gemäß Anspruch 1, **dadurch gekennzeichnet, dass** das Statusänderungsmittel (9) eine Bewegung eines Bewegtbildes stoppen kann und auch einen anzuzeigenden Frame auslassen kann.

5. Ein Bildanzeigeverfahren, das eine Bildanzeigevorrichtung, die eine Mehrzahl von Bildern, die aus einer Mehrzahl von Grafikdaten (201-204) erzeugt werden, überlagert und die die überlagerten Bilder auf einer Bildanzeige (305) anzeigt, verwendet, das die folgenden Schritte umfasst:
ein Eingeben, durch besagte Bildanzeigevorrichtung, von besagten Grafikdaten (201-204), von einer Layout-Information (101-104), die ein Anzeigelayout derjenigen Bilder, die von besagten Grafikdaten erzeugt werden, auf besagter Bildanzeige für jede der Schichten, zu denen besagte Bilder gehören, definiert, und von einer Schichtstrukturinformation (300), die eine geschichtete Struktur (10, 13, 16) von den Schichten, zu denen die Bilder, die von besagten Grafikdaten (201-204) erzeugt werden, gehören, beschreibt und die einen Betriebsstatus (11, 14, 17) umfasst, wobei der Betriebsstatus definiert, ob ein Bild für jede der Schichten sichtbar oder unsichtbar zu machen ist, und definiert, ob ein Bewegtbild für jede der Schichten auf Wiedergabe oder Stopp darzustellen ist;
ein Einrichten, durch besagte Bildanzeigevorrichtung, von Informationen über Anzeigepositionen, eine Zeichnungsfolge und den Betriebsstatus auf besagter Bildanzeige (305) von den Bildern, die von besagten eingegebenen Grafikdaten (201-204) erzeugt werden, für jede der Schichten auf einer Basis von besagter Layoutinformation (101-104) und besagter Schichtstrukturinformation (300);
ein Übergeben, durch besagte Bildanzeigevorrichtung, der eingegebenen Grafikdaten (201-204) an einen Anzeigespeicher (302) auf einer Basis der Informationen, die in dem Einrichtungsschritt eingerichtet werden;
ein Ändern, durch besagte Bildanzeigevorrichtung, der geschichteten Struktur der Schichten der Schichtstrukturinformation (300); und
ein Ändern, durch besagte Bildanzeigevorrichtung, des Betriebsstatus auf der Bildanzeige (305) von einem Bild, das von besagten Grafikdaten auf einer Schicht-um-Schicht-Basis erzeugt wird, wobei, wenn solch ein Betriebsstatus einer Schicht von sichtbar auf unsichtbar und von Wiedergabe auf Stopp geändert wird, ein Bild in dieser Schicht unsichtbar gemacht und auf Stopp dargestellt werden kann,
wobei die Anzeigepositionen der Bilder, die aus besagten Grafikdaten (201-204) erzeugt werden, geändert werden durch Ändern der Beschreibung der Schichtstrukturinformation (300) und der Beschreibung von besagter Layoutinformation (101-104).

## Revendications

1. Dispositif d'affichage d'images destiné à superposer une pluralité d'images générée à partir d'une pluralité de données graphiques, et à afficher les images superposées sur un écran d'affichage (305), comprenant :
un moyen d'entrée (1, 2, 4) pour entrer lesdites données graphiques (201 - 204), des informations de présentation (101 - 104) qui définissent une présentation d'affichage des images générées à partir desdites données graphiques (201 - 204) sur l'écran d'affichage (305), pour chacune des couches auxquelles lesdites images appartiennent, et des informations de structure de couches (300) qui décrivent une structure multicouche (10, 13, 16) des couches auxquelles les images générées à partir desdites données graphiques (201 - 204) appartiennent et qui incluent un état d'exploitation (11, 14, 17), dans lequel l'état d'exploitation définit s'il convient de rendre visible ou non visible une image pour chacune des couches, et définit s'il convient de mettre en oeuvre une reproduction ou une interruption d'une image animée pour chacune des couches ;
un moyen de commande (5) pour configurer des informations sur des positions d'affichage, un ordre de dessin et l'état d'exploitation sur ledit écran d'affichage (305) des images générées à partir desdites données graphiques (201 - 204) entrées par le moyen d'entrée (1, 2, 4), pour chacune des couches, sur la base desdites informations de présentation (101 - 104) et desdites informations de structure de couches (300) ;
un moyen de transfert de données (6) pour transférer les données graphiques (201 - 204) entrées par le moyen d'entrée (1, 2, 4) à une mémoire d'affichage (302), sur la base des informations configurées par le moyen de commande (5) ;
un moyen de modification de structure de couches (8) pour modifier la structure multicouche des couches des informations de structure de couches (300) ; et
un moyen de modification d'état (9) pour modifier l'état d'exploitation, sur l'écran d'affichage (305), d'une image générée à partir desdites données graphiques, sur une base « couche par couche », dans lequel le dispositif d'affichage d'images est configuré de sorte que, si le moyen de modification d'état (9) modifie un tel état d'exploitation d'une couche, de visible à non visible, et de reproduction à interruption, une image dans cette couche peut être rendue non visible et être interrompue ;
dans lequel le moyen de modification de structure de couches (8) et le moyen de modification d'état (9) sont aptes à modifier les positions d'affichage des images générées à partir desdites données graphiques (201 - 204), en modifiant la description des informations de structure de couches (300) et la description desdites informations de présentation (101 - 104).

2. Dispositif d'affichage d'images selon la revendication 1, **caractérisé en ce que** le dispositif d'affichage d'images inclut un moyen de configuration de transparence (7) pour configurer une transparence d'une image générée à partir de données graphiques.

3. Dispositif d'affichage d'images selon la revendication 1, **caractérisé en ce que** le dispositif d'affichage d'images inclut un moyen de combinaison d'images de couches (10) pour superposer des images générées à partir de données graphiques, les unes sur les autres, sur une base « couche par couche » et sur la base des informations de structure de couches (300) de manière à générer des images de composites de couches (14a, 14b, 14c) ; et
le moyen de transfert de données (6) est configuré de manière à transférer les images de composites de couches générées, par le moyen de combinaison d'images de couches, à la mémoire d'affichage (302).

4. Dispositif d'affichage d'images selon la revendication 1, **caractérisé en ce que** le moyen de modification d'état (9) peut interrompre le mouvement d'une image animée, et peut également sauter une trame à afficher.

5. Procédé d'affichage d'images utilisé par un dispositif d'affichage d'images qui superpose une pluralité d'images générée à partir d'une pluralité de données graphiques (201 - 204) et qui affiche les images superposées sur un écran d'affichage (305), comprenant les étapes dans lesquelles :
ledit dispositif d'affichage d'images entre lesdites données graphiques (201 - 204), des informations de présentation (101 - 104) qui définissent une présentation d'affichage des images générées à partir desdites données graphiques, sur ledit écran d'affichage, pour chacune parmi des couches auxquelles lesdites images appartiennent, et des informations de structure de couches (300) qui décrivent une structure multicouche (10, 13, 16) des couches auxquelles les images générées à partir desdites données graphiques (201 - 204) appartiennent et qui incluent un état d'exploitation (11, 14, 17), dans lequel l'état d'exploitation définit s'il convient de rendre visible ou non visible une image pour chacune des couches, et définit s'il convient de mettre en oeuvre une reproduction ou une interruption d'une image animée pour chacune des couches ;
ledit dispositif d'affichage d'images configure des informations sur des positions d'affichage, un ordre de dessin et l'état d'exploitation sur ledit écran d'affichage (305) des images générées à partir desdites données graphiques entrées (201 - 204) pour chacune des couches, sur la base desdites informations de présentation (101 - 104) et desdites informations de structure de couches (300) ;
ledit dispositif d'affichage d'images transfert les données graphiques entrées (201 - 204) à une mémoire d'affichage (302), sur la base des informations configurées au cours de l'étape de configuration ;
ledit dispositif d'affichage d'images modifie la structure multicouche des couches des informations de structure de couches (300) ; et
ledit dispositif d'affichage d'images modifie l'état d'exploitation, sur l'écran d'affichage (305), d'une image générée à partir desdites données graphiques, sur une base « couche par couche », dans lequel, si un tel état d'exploitation d'une couche est modifié de visible, à non visible et de reproduction à interruption, une image dans cette couche peut être rendue non visible et être interrompue ;
dans lequel les positions d'affichage des images générées à partir desdites données graphiques (201 - 204) sont modifiées, en modifiant la description des informations de structure de couches (300) et la description desdites informations de présentation (101 - 104).
